# EUROPEAN PATENT APPLICATION

(11) **EP 2 003 228 A2**
(43) Date of publication of application: **17.12.2008**
(21) Application number: 07739350.2
(22) Date of filing: 22.03.2007
(51) Int. Cl.: C23C 24/06, B05D 7/14, B05D 7/24, C04B 41/51, C04B 41/88

(54) **PROCESS FOR PRODUCING METAL COATING MATERIAL AND METAL COATING MATERIAL**

(30) Priority: 22.03.2006 JP 2006078011
(71) Applicant: Sumi, Kiichirou, Inamachi, Kita Adachi-gun Saitama 3620808 (JP); T.N.G. Technologies Co., Ltd., Kyoto-city, Kyoto 600-8468 (JP)
(72) Inventor: SUMI, Kiichirou, Saitama 3620808 (JP)
(74) Representative: HOFFMANN EITLE
(86) International application number: PCT/JP2007/055907
(87) International publication number: WO 2007/108512

(57) **Abstract**

The present invention relates to a method for producing a metallic coating material to coat the surface of matrices with a metal, and it is an object of the invention to provide a method for producing a metallic coating material for which there is no concern that metallic powder will scatter or ignite at the time of production, and which is excellent in productivity not requiring any cumbersome process such as burning at a high temperature, etc., and is excellent in decorative features and functionality such as a catalyzing action. With the method for producing a metallic coating material according to the present invention, a metallic layer that coats the surface of the matrices with the metallic powder is formed by the mechanical alloying of matrices formed by any of ceramic, mineral, metal, synthetic resin, or a mixed material thereof, and metallic powder.

## Description

### [TECHNICAL FIELD]

The present invention relates to a method for producing metallic coating material, by which the surface of matrices is coated with a metal, and a metallic coating material.

### [BACKGROUND OF THE INVENTION]

Conventionally, metal oxides such as TiO₂, ZnO, WO₃, Fe₂O₃, etc., have been widely used for purification, sterilization, deodorization, antifouling, etc. , of water and air as a material of a photocatalyst. Such a material of a photocatalyst is usually used as a powdery material.
However, a powdery material has shortcomings that the material easily scatters and clumps together, and it is difficult to disperse, and difficult to handle and collect the material. Therefore, a technology to solidify a material of a photocatalyst on matrices has been developed. In addition, a technology to coat a material of a photocatalyst on the surface of matrices has been developed.
As such prior arts, [Patent Document 1] and [Patent Document 2] disclose a [photocatalyst-coated composition produced by jetting powder made of titanium or titanium alloy onto the surface of matrices such as metal or ceramic, and by forming a film of titanium oxide on the surface of the matrices] .
Also, [Patent Document 3] discloses a [method for producing a photocatalyst film by coating a coating solution using titanium alkoxide on the surface of matrices by means of a spin coating method, etc., and burning the same at 500 to 700°C after the coated film is dried].
[Patent Document 1] Japanese Published Unexamined Patent Application No. 2000-61314
[Patent Document 2] Japanese Published Unexamined Patent Application No. 2004-344687
[Patent Document 3] Japanese Published Unexamined Patent Application No. 2000-271491

### [DISCLOSURE OF THE INVENTION]

### [Objects to be Solved by the Invention]

However, the above-describedprior arts have the following shortcomings and problems.
(1) With the technology disclosed by [Patent Document 1] or [Patent Document 2], titanium powder or titanium alloy powder is jetted onto the surface of matrices, and is welded and adhered to the surface of the matrices, wherein the outermost surface of the welded and adhered film is oxidized to form a titanium oxide film. However, there is a problem that the titanium powder or titanium alloy powder easily ignites at a high temperature, and in an extreme case, may explode. Furthermore, there is another problem that, since jetted powder is adhered not only to the matrices but also to a jetting device and to the interior of a chamber, etc. in which the matrices are disposed, jetting efficiency is lacking, and the cleaning work requires a significant amount of labor, wherein productivity is lacking.
(2) There is still another problem that, since jetting powder is jetted onto matrices through a nozzle whose diameter is 9mm or so, and a titanium oxide film is locally formed on the surface of the matrices onto which the jetting powder is jetted, it is necessary to cause the nozzle or the matrices to move for scanning where a titanium oxide film is formed on the entire surface of the matrices, wherein the productivity is lacking.
(3) There is still a further problem that, since the technology disclosed by [Patent Document 3] requires various steps, which include a step of coating a coating solution on the surface of matrices and forming a coated film, a step of drying the coated film, and a step of burning the same at a temperature of 500 to 700°C, the method is cumbersome and productivity is lacking.
(4) Also, there is another problem that, since the matrices may change in quality due to heat when the matrices and the coated film are burned at a temperature of 500 to 700°C, the method lacks stability in quality.

The present invention was developed to solve the above-described conventional problems, and it is therefore an object thereof to provide a method for producing a metallic coating material for which there is no concern that the metallic powder will scatter or ignite at the time of production, and which does not require any cumbersome processes such as burning at a high temperature and is excellent in productivity.
It is another object of the present invention thereof to provide a metallic coating material that is excellent in decorative features and functionality such as a catalyzing action, and is excellent in handling efficiency.

### [MEANS FOR SOLVING THE OBJECTS]

In order to solve the above-described conventional problems, a method for producing a metallic coating material, and a metallic coating material according to the present invention have the following composition.
A method for producing a metallic coating material according to a first aspect of the present invention has a composition for forming a metallic layer, by which the surface of matrices is coated with metallic powder, by the mechanical alloying of matrices formed by any of ceramic, mineral, metal, synthetic resin, or a mixed material thereof, and metallic powder.
With the composition, the following actions maybe brought about.
(1) Since the metallic layer may be obtained by a mechanical alloying method by which matrices and metallic powder are placed in a high energy mill, etc., and are subjected to mechanical treatment, there is no concern that the metallic powder will ignite or explode, etc. at the time of production, and does not require any cumbersome processes such as burning at a high temperature, wherein productivity is excellent.
(2) Also, if the matrices and metallic powder are fed into ahigh-energymill, etc. with the quantity ratio thereof adjusted while the surface area of the matrices is taken into consideration, a metallic coating material may be obtained. Therefore, metallic powder is hardly wasted due to scattering, etc. through production, and the thickness, etc. of the metallic layer may be readily controlled by adjusting the energy amount given to the matrices and the metallic powder. Furthermore, since other compositions than a stoichiometrical ratio and various types of metallic layers may be formed, versatility is excellent.
(3) By coating the surface of the matrices with a metallic layer, a metallic coating material may be produced, by which the decorative effect and catalyzing action, etc. may be displayed based on the metallic layer, and excellent handling efficiency may be brought about.
(4) Since, by mechanical alloying the matrices and the metallic powder, the metallic powder is crushed, micronized, and compressed by the surface of the matrices, a film-like or minutely granulated metallic layer may be formed, wherein the decorative features and functionality such as a catalyzing action may be improved based on the metallic layer.

Herein, the metallic coating material is produced by a mechanical alloying method utilizing spreadability of metallic powder. In the mechanical alloying method, matrices and metallic powder are mechanically agitated in a high-energy mill, etc. wherein the metallic powder is crushed between the matrices and between the matrices and the inner wall of the mill vessel, compressed and kneaded therein, wherein the spreadability of the metallic powder may be advanced, and the surface of the matrices is coated with a metallic layer by a solid-phase reaction. Also, a vibration mill, a planetary mill, a medium agitation type crushing apparatus such as an attritor, etc., a blasting apparatus, a jet crushing apparatus, etc., may be used as means for giving mechanical energy.
Where a metallic coating material is produced by using a planetary mill, it is favorable that the rotation is 400 rpm ormore and the revolution is 200 rpmormore. Also, it is favorable that the time of rotation and revolution is 30 seconds or more. This is because high energy is given to the matrices and the metallic powder.

Ceramic, mineral, metal, synthetic resin or a mixed material thereof may be used as the matrices, and the shape thereof may be spherical, polyhedral, lump-shaped, plate-shaped, etc. Where the matrices are formedtobe spherical, polyhedral or lump-shaped, if metallic powder and matrices are placed in a high-energy mill, etc., and are subjected to mechanical treatment, a metallic layer may be formed on the surface of the matrices. Where the matrices are plate-shaped, if media such as balls, rods, etc. , are placed in a high-energy mill, etc. in addition to the metallic powder and the matrices, and are subjected to mechanical treatment, the metallic powder is spread by the media and the matrices, wherein a metallic layer may be formed on the surface of the matrices.

The ceramic matrices may be formed of alumina, silicon carbide, silicon nitride, zirconia, etc. Since ceramics have open pores on the surface thereof, the metallic layer may be brought in the open pores, the cohesive strength of the metallic layer may be increased. Also, where ceramics such as zirconia having a radiative effect of far-infrared rays is used, the radiative effect of far-infrared rays may be expected from the matrices.

The mineral matrices maybe formed of a radioactive mineral such as mosanite, hematite, amphibolite, andesite, etc. Also, artificial minerals may be used. Since minerals have fine projections and recesses on the surface thereof, a metallic layer may be brought into or over the projections and recesses, the cohesive strength of the metallic layer may be increased. In addition, by using a radioactive material and a mineral having a radiative effect of far-infrared rays, an analgesia effect and a far-infrared ray radiative effect may be expected based on a radioactive material. Also, fragile minerals such as prase zeolite, etc. , are not favorable because they are easily crushed in mechanical alloying.

Metal-made matrices may be formedof inexpensive universal metal, for example, iron, aluminum, tin, copper, hematite, etc. In addition, the matrices may also be formed of titanium and noble metals such as gold, platinum, etc. Since the metallic layer forms an intermetallic compound and a solid solution along with the matrices and becomes like an alloy, it increases the cohesive strength of the metallic layer.

As synthetic resin-made matrices, thermoplastic resin and thermal-hardening resin such as polypropylene, polyethylene, ABS resin, acrylic resin, polyacetal, fluorocarbon resin, epoxy resin, unsaturated polyester, etc., may be used. In addition, the synthetic resin-made matrices may also be formed of engineering resin such as polyamide, polyacetal, polycarbonate, etc., and special engineering resin (super engineering plastic) such as polysurfone, polyphenylene surfide, polyarylate, polyamide imide, etc. This is because these materials are hardly molten in mechanical alloying. In particular, the synthetic resin-made matrices that are formed of engineering resin and special engineering resin (Super engineering plastic) are favorably used. This is because these materials are excellent inheat resistance, and are hardlymolten and deformed through mechanical alloying. In the synthetic resin, fine scrapes, projections and recesses are formed on the surface by the mechanical alloying with metallic powder, wherein the metallic layer may be brought into or over the scrapes, projections and recesses, the cohesive strength of the metallic layer may be increased, wherein lightening of the weight may be achieved.

The grain size and major axis of the matrices may be appropriately selected to be from a fine grain size, for example, 0.3mm on average, to a longer one if the mechanical energy may be given. That is, the grain size and major axis of which is 0.3mm through 30mm on average may be favorably used. This is because the specific surface area of the matrices may be increased.
In addition, the grain size of the metallic powder may be sub-microns to 3mm on average, preferably 1µm through 3 mm, wherein finer metallic powder than the grain size or major axis of the matrices is favorably used. This is because in the mechanical alloying method, metallic powder may be placed and crushed between matrices or between media and matrices, and the metallic powder is compressed to form a metallic layer on the surface of the matrices.

After matrices and metallic powder are injected into a vessel such as a high-energy mill, etc., and are subjected to mechanical alloying, another type of metallic powder is injected therein and are subjected to mechanical alloying again, wherein an alloy-like or laminated metallic layer may be formed of a plurality of types of metallic powder. Therefore, the gloss or sheen of the metallic layer may be increased, depending on the type of the metallic powder, and an intermetallic compound is formed in the metallic layer to display a new function such as a catalyzing function.
In addition, by placing a plurality of types of metallic powder along with matrices in a vessel of a high-energy mill, etc. , and executing mechanical alloying thereof, it is possible to produce a metallic coating material having a metallic layer composed of a plurality of types of metallic powder brought into an alloy state. Also, by placing a plurality of types of matrices and one or more types of metallic powder in a vessel ofahigh-energymill, etc. and executing the mechanical alloying, it is also possible to produce, at once, a metallic coating material in which a great variety of matrices and metallic layers are combined.

A method according to a second aspect of the present invention is the method for producing a metallic coating material according to the first aspect thereof and has a composition in which the metallic powder contains one or a plurality of elements selected from tin, silver, copper, gold, platinum, ruthenium, palladium, and iridium.
With the composition, the following actions may be brought about in addition to those actions obtained by the first aspect.
(1) Since the metallic powder contains one or a plurality of elements selected from tin, silver, copper, gold, platinum, ruthenium, palladium, and iridium, the gloss or sheen of the metallic layer is satisfactory, and the metallic layer is excellent in decorative features. Furthermore, it is possible to display a high catalyzing action and a high disinfection action, etc. based on actions of the metallic layer that is micronized and compressed by the mechanical alloying and are solidified to be like film or minutely granular on the surface of the matrices.
(2) Since the melting point of the metallic powder is 1800°C or less, the metallic layer may be readily formed on the surface of the matrices by the mechanical alloying method.

A method according to a third aspect of the present invention is the method forproducingametallic coatingmaterial according to the first aspect or the second aspect thereof, and has a composition in which the metallic powder contains a titanium element.
With the composition, the following action may be brought about in addition to those obtained by the first or the second aspect thereof.
(1) Since the metallic powder contains a titanium element, a far-infrared ray radiative effect may be expected. Also, since titanium oxides are formed if the formed metallic layer is oxidized, it is possible to produce a metallic coating material that may display a photocatalyst function. It is found that the thus obtained metallic coating material may realize the effect even in a dark place and a visible light environment. With the metallic coating material, it is possible to purify, disinfect, deodorize, and provide antifouling of water and air, and preserve the freshness of foods, prevent edible oils from deteriorating, and reduce the quantity of liquid fuel and gas fuel consumed. In addition, by bringing the metallic coating material into contact with water, the water is reformulated to be suitable for the growth of plants. Also, the amount of oils and fats contained in fried foods maybe reduced by immersing the metallic coating material in an edible oil for frying. Further, by utilizing water in which the metallic coating material is immersed, it is possible to bring about an effect for preventing rust by which red rust occurring in a metallic pipe is blackened, and to lighten the toxicity of agricultural chemicals.

Herein, metallic powder containing a titanium element may be formed of pure titanium belonging to Class I through Class IV, etc. of the Japanese Industrial Standards or of a titanium alloy such as Ti-3A1-2.5V, Ti-6A1-4V, Ti-15V-3Cr-3Sn-3A1, etc.

If the interior of the vessel of a high-energy mill, etc. in which mechanical alloying is carried out is brought into an atmosphere having a high oxygen ratio or an oxidization agent is mixed thereinto, the oxygen content of the metallic layer is increased, wherein it is possible to improve the photocatalyst function of the metallic layer. In addition, if the interior of the vessel is brought into an inactive gas atmosphere or a nitrogen atmosphere, the oxygen content of the metallic layer is decreased, wherein the gloss or sheen of the metal may be increased.

A method according to a fourth aspect of the present invention is the method for producing a metallic coating material according to any one of the first aspect through the third aspect of the invention and has a composition in which titanium oxide powder is added to the metallic powder.
With the composition, the following action may be brought about in addition to the actions obtained by any one of the first aspect through the third aspect of the invention.
(1) Since the metallic layer is caused to carry and support titanium oxide powder and the photocatalyst function may be increased, and at the same time, the carrier of titanium oxide powder is not an organic substance but a metallic layer, there is no case where the carrier is decomposed by the photocatalyst function of titanium oxide powder, and titanium oxide powder maybe permanently carried, wherein the durability is excellent.

Herein, the titanium oxide powder may be powder whose crystal substance is anatase, rutile, and buchite. Also, powder in which titanium oxide is complex compounded by other compounds such as silica oxide, apatite, etc., may be used. By a complex compound, titanium oxide powder is caused to display other functions.
Also, mineral powder such as natural zeolite, artificial zeolite, etc. , may be added in addition to titanium oxide powder. By causing the titanium oxide powder to carry zeolite, etc., the mineral powder once adsorbs an organic substance, etc., and next, the organic substances, etc. may be decomposed by titanium oxide powder brought into contact therewith, wherein the photocatalyst function may be increased.

It is favorable that titanium oxide powder is added at a ratio of 1 through 100 parts by weight, preferably 10 through 30 parts by weight per 100 parts of metallic powder. There is a tendency by which display of the photocatalyzing action based on titanium oxide powder is reduced in line with a decrease thereof to 10 parts or less by weight, and the carrying capacity of titanium oxide powder based on the metallic layer is lowered in line with an increase thereof to 30 or more parts by weight. Neither are preferable.

A metallic coating material according to a fifth aspect of the present invention has a composition produced by the method for producing a metallic coating material according to any one of the first aspect through the fourth aspect of the invention.
With the composition, the following actions may be brought about.
(1) Since the surface of the matrices is coated with a metallic layer formed of metallic powder, the decorative effect and catalyzing action, etc. by the metallic layer may be displayed, and the metallic coating material is excellent in handling efficiency.
(2) Since the metallic coating material has a film-like or minutely granulated metallic layer having metallic powder crushed and compressed on the surface of the matrices, the metallic coating material is excellent in decorative features and functionality such as a catalyzing action by the metallic layer.

### [EFFECTS OF THE INVENTION]

As described above, the following advantageous effects may be brought about by the method for producing a metallic coating material and by the metallic coating material according to the present invention.
According to the first aspect of the invention, the following effects may be brought about.
(1) Since the metallic layer may be obtained by the mechanical alloying method in which matrices and metallic powder are placed in a high-energy mill, etc., and are subjected to mechanical treatment, there is no concern that the metallic powder will ignite or explode, etc. at the time of production, and does not require any cumbersome processes such as burning at a high temperature. Therefore, a method for producing a metallic coatingmaterial having excellent productivity may be provided.
(2) If matrices and metallic powder are fed into a high-energy mill, etc. with the quantity ratio thereof adjusted while the surface area of the matrices is taken into consideration, a metallic coating material may be obtained. Therefore, metallic powder is hardly wasted due to scattering, etc. through production, and the thickness, etc. of the metallic layer may be readily controlled by adjusting the energy amount given to the matrices and the metallic powder. Furthermore, since other compositions than the stoichiometrical ratio and various types of metallic layers may be formed, a method for producing a metallic coating material having excellent versatility may be provided.
(3) A method for producing a metallic coating material may be provided, by which a metallic coating material that may display decorative features and catalyzing action, etc. based on the metallic layer and is excellent in handling efficiency may be brought about by coating the surface of the matrices with a metallic layer.
(4) Since, by mechanical alloying the matrices and the metallic powder, the metallic powder is crushed, micronized, and compressed on the surface of the matrices, and a film-like or minutely-granulated metallic layer may be formed, a method for producing a metallic coating material that may increase the function of the catalyzing action, etc. based on the metallic layer may be provided.

According to the second aspect of the invention, the following effects may be brought about in addition to those of the first aspect.
(1) A method for producing a metallic coating material may be provided, which has excellent gloss or sheen and decorative features in regard to the metallic layer, and at the same time, displays a high catalyzing action and a high disinfection action, etc. based on actions of the metallic powder micronized by the mechanical alloying and solidified to be film-like or minutely granular on the surface of the matrices.
(2) A method for producing a metallic coating material may be provided, which may readily form the metallic layer on the surface of the matrices by the mechanical alloying method since the melting point of the metallic powder is 1800°C or less.

According to the third aspect of the invention, the following effect may be brought about in addition to those of the first aspect or the second aspect.
(1) The metallic powder contains titanium elements. Therefore, if a formed metallic layer is oxidized, titanium oxides are formed, it is possible to provide a method for producing a metallic coating material that displays a photocatalyst function and displays various functions such as purification, disinfection, deodorization, antifouling of water and air, preserving the freshness of foods, preventing edible oils from deteriorating, and reduction in the quantity of liquid fuel and gas fuel consumed, reformulating of water suitable for the growth of plants, reduction of fats and oils contained in fried foods by immersing the metallic coating material in edible oils for frying, prevention of rust by blackening red rusts occurring in metallic pipes by utilizing water in which the metallic coating material is immersed, and lightening the toxicity of agricultural chemicals, etc.

According to the fourth aspect of the invention, the following effect may be brought about in addition to those of any one of the first aspect through the third aspect.
(1) Since the metallic layer is caused to carry and support titanium oxide powder and the photocatalyst function may be increased, and at the same time, the carrier of titanium oxide powder is not an organic substance but a metallic layer, there is no case where the carrier is decomposed by the photocatalyst function of titanium oxide powder, wherein it is possible to provide a method for producing a metallic coating material that may permanently carry titanium oxide powder, and is excellent in durability.

According to the fifth aspect of the invention, the following effects may be brought about.
(1) It is possible to provide a metallic coating material that may display a decorative effect and a catalyzing action, etc. based on the metallic layer and, at the same time, is excellent in handling efficiency since the surface of the matrices is coated with a metallic layer formed of metallic powder.
(2) It is possible to provide a metallic coating material that is excellent in decorative features and functionality such as a catalyzing action based on a metallic layer since the metallic coating material has a film-like or minutely granular metallic layer which is formed of crushed metallic powder and compressed on the surface of the matrices.

### [BRIEF DESCRIPTION OF THE DRAWINGS]

Fig. 1 is a view showing a transition in formaldehyde concentration in an enclosed container; and
Fig. 2 is a view showing change ratios in oxidation-reduction potential per elapsed time with respect to the oxidation-reduction potential of water ten minutes after a metallic coating material is immersed therein.

### [BEST MODE FOR CARRYING OUT THE INVENTION]

Hereinafter, a further detailed description is given of the present invention based on the embodiments. Also, the present invention is not limited to these embodiments.

### [Embodiment 1]

Mechanical alloying was carried out, in which spherical matrices of 125 grams made of alumina having an average grain size of 8mm, silver powder (purity: 99%) of 2 grams having a grain size of 50 to 100µm as metallic powder, and titaniumdioxide powder of 2 grams having a grain size of 50 to 100µm are injected into a titanium-made planetary mill container, and the container is subjected to planetary movement by which it is revolved at 500rpm and is rotated at 1250rpm for five minutes. After the matrices are taken out from the planetary mill container, the matrices are immersed in water and washed. When observed by means of a microscope, it is confirmed that silver powder and titanium dioxide powder, which are micronized to be 1µm or less are solidified on the surface of the matrices. According to the above, it is found that what has been obtained in Embodiment 1 is a metallic coating material on which a metallic layer containing silver and titanium dioxide powder is formed.

### [Test Example 1]

A confirmation test was carried out in regard to a deodorizing effect using the metallic coating material according to Embodiment 1.
After the metallic coating material of 100 grams according to Embodiment 1 was accommodated in an enclosed container whose capacity is 96 liters, the air in the enclosed container was heated to 150°C by means of a heater. Next, 20 microliters (µl) of formaldehyde was injected into the enclosed container by a hypodermic syringe, and at the same time, detection of the formaldehyde concentration in the enclosed container was commenced by means of a gas sensor. After 60 minutes elapsed after formaldehyde was injected, air circulation in the enclosed container was commenced by an air blower disposed in advance in the enclosed container. The detection of the formaldehyde concentration was continued until 170 minutes elapsed since formaldehyde was injected. The detection thereof was carried out for respective cases, one of which is a case where air in the enclosed container is circulated at a flow rate of 2 liters per minute and the other of which is a case where it is circulated at a flow rate of 3 liters per minute. Also, during the experiment described above, the enclosed container was placed in a dark place.

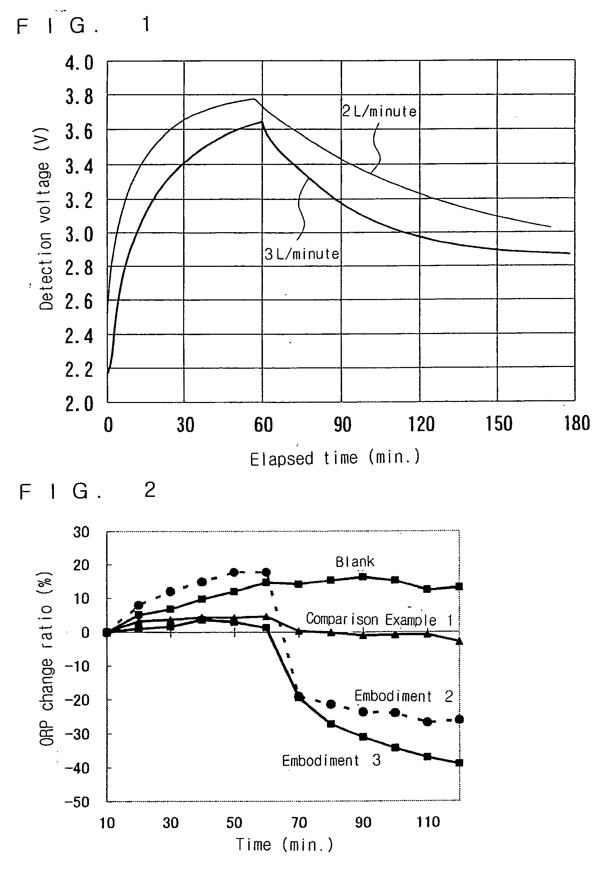

Fig. 1 is a view showing a transition in a formaldehyde concentration in an enclosed container. In addition, the formaldehyde concentration was shown based on detection voltage (V) of a gas sensor corresponding to the concentration. A decrease in the detection voltage shows that the formaldehyde concentration in the enclosed container is lowered.
According to Fig. 1, it is found that, since the detection voltage is increased for 60 minutes after commencement of the measurement, the formaldehyde concentration gradually increases. This means that injected formaldehyde spreads in the enclosed container. If circulation of air in the enclosed container is commenced after 60 minutes elapsed, and air in the enclosed container is brought into contact with the metallic coating material, it is found that, since the detection voltage begins to decrease, the formaldehyde concentration is lowered. And, the decrease amount (elapsed time 60 to 120 minutes) of the detection voltage is 0.68V in the case where the flow rate is three liters per minute, and is 0.56V in the case where the flow rate is two liters per minute. Therefore, it is found that the case of a greater flow rate causes a greater decrease amount in formaldehyde concentration. So, the greater flow rate means that the total cubic volume of air brought into contact with the metallic coating material is greater. According to the experiment, it is clear that the metallic coating material decomposes formaldehyde brought into contact therewith, and is excellent in a deodorizing effect.

### [Embodiment 2]

Mechanical alloying was carried out, in which spherical matrices of 125 grams made of alumina having an average grain size of 8mm and titanium powder (purity: 99%) of 2 grams having a grain size of 50 to 100µm as metallic powder are injected into a titanium-made planetarymill container, and the container is subjected to planetary movement by which it is revolved at 500rpm and is rotated at 1250rpm for five minutes. After the matrices are taken out from the planetary mill container, the matrices are immersed in water and cleaned. When observed by means of a microscope, it is confirmed that titanium is adhered to the surface of the matrices like a film. According to the above, it is found that what has been obtained in Embodiment 2 is a metallic coating material having a metallic layer of titanium formed thereon.

### [Test Example 2]

An effect for preventing edible oils from deterioration was confirmed using a metallic coating material according to Embodiment 2.
After the metallic coating material of 50 grams according to Embodiment 2 was immersed in a salad oil of 1 liter available on the market and was heated for 8 hours at 180°C, the acid number thereof was measured. The acid number was obtained by titrating it with an ethanol solution of potassium hydroxide using phenolphthalein as an indicator. For comparison, the acid numbers of salad oil that was heated under the same condition without the metallic coating material immersed, and of salad oil before heating were also measured.
As a result, the acid number of salad oil before heating is 0.05, the acid number of salad oil heated without the metallic coating material immersed was 0.08, while the acid number of the salad oil heated with the metallic coating material immersed according to Embodiment 2 was 0.06.
According to the experiment, it was confirmed that the metallic coating material according to Embodiment 2 is capable of controlling the acid number of salad oil at a low level, reducing oxidization (corrosion) of oil, and expanding the service life thereof.

In addition, the applicant asked a packed lunch operator for cooperation in the testing. The metallic coating material of 1kg according to Embodiment 2 is immersed in a salad oil tank (18 liters) , and the acid number of the salad oil was measured once a day when foods of the same quantity as during normal business hours were fried. The acid number was obtained by titrating it with an ethanol solution of potassium hydroxide using phenolphthalein as an indicator. For comparison, the acid number of salad oil during normal business hours when frying without the metallic coating material immersed was also measured.
As a result, as for salad oil used to fry foods without the metallic coating material immersed therein, the acid number exceeds 3 on the eighth day. Generally at a packed lunch operator, etc., an edible oil whose acid number exceeds 3 is replaced with new oil. As for the oil used to fry foods with the metallic coating material immersed therein, the acid number was only 2 or less even after 14 days.
As described above, it is clear that deterioration of salad oil may be prevented by using the metallic coating material according to Embodiment 2. It is expected that fossilized fuel products such as lubricants, insulation oil, etc., may be similarly prevented from deteriorating.

### [Embodiment 3]

Mechanical alloying was carried out, in which about 300 spherical matrices made of stainless steel having an average grain size of 8mm and titanium powder (purity: 99%) of 1 gram having an average grain size of 100µm as metallic powder are injected into a planetary mill container, and the container is subjected to planetary movement by which it is revolved at 500rpm and is rotated at 1250rpm for five minutes. After the matrices are taken out from the planetary mill container, the matrices are immersed in water and washed. When observed by means of a microscope, it is confirmed that a film-like metallic layer of titanium was formed on the surface of the matrices. According to the above, it is found that what has been obtained in Embodiment 3 is a metallic coating material having a metallic layer of titanium formed thereon.

### [Comparison Example 1]

After matrices made of stainless steel having an average grain size of 8mm are arranged and held so as not to be splashed by a jetting pressure of a blast treatment, jetting powder (whose average grain size is 80µm) of pure titanium (purity: 99.5%) is jetted through a nozzle, the diameter of which is 9mm, under pressure of 0.59MPa, and the surface of the matrices was coated with titanium. Also, the distance from the nozzle to the matrices was 200mm. After coating of the surface of the matrices onto which jetting is available was finished, the matrices were rearranged and held so that the surface of the matrices that were at the shaded side could be seen, and the coating was carried out in the same manner. A metallic coating material according to Comparison Example 1 was obtained by repeating the above operation several times.

### [Test example 3]

An effect of lowering the oxidation-reduction potential of water was confirmed, using metallic coating materials according to the embodiment and the comparison example.
After water from Ageo Shi (City) in Saitama Ken (Prefecture) was sampled in containers at 100 milliliters each, metallic coating materials according to Embodiments 2 and 3 and Comparison Example 1 were separately immersed by 70 grams each in water of respective containers, and were left to stand in an indoor dark place. After ten minutes elapsed after the metallic coating materials were immersed, the oxidation-reduction potential (ORP) of water was measured once every ten minutes, using an oxidation-reduction potentiometer (ORP-203). The measurement electrodes of the oxidation-reduction potentiometer were retained at the intermediate position between the upper surface of the immersed metallic coating material and the water level surface. When 60 minutes elapsed after the metallic coating materials were immersed, water in the containers was agitated by being sucked in and is again discharged by a hypodermic syringe.
Fig. 2 is a view showing change ratios in oxidation-reduction potential per elapsed time with respect to the oxidation-reduction potential of water ten minutes after a metallic coating material is immersed therein, in regard to water in which metallic coating materials according to Embodiments 2 and 3, and Comparison Example 1 are immersed, and for blank water (in which no metallic coating material is immersed).
According to Fig. 2, it is obvious that the oxidation-reduction potential may be further lowered by immersing a metallic coating material according to Embodiments 2 and 3 in water than in the case where a metallic coating material according to Comparison Example 1 is immersed in water. Therefore, it was confirmed that the metallic coating material according to the embodiments realized an effect for preventing a substance from oxidizing and corroding.
Although the reason why the effect of lowering the oxidation-reduction potential by the metallic coating material according to the embodiments is more excellent than that of the metallic coating material according to the Comparison Example 1 and has higher reduction power is not clear, it seems that the reason pertains to composition of a metallic layer brought about by metallic powder micronized and compressed by the mechanical alloying method.
Also, when measuring the oxidation-reduction potential under direct sunlight in regard to water in which the metallic coating material according to Embodiment 1 is immersed, it was found that the oxidation-reduction potential could be much further lowered than in the case shown in Fig. 2. According to the result, it was confirmed that the metallic coating material according to the present embodiments could realize not only a reduction action in a dark place but also a reduction action under direct sunlight.

### [Test Example 4]

In Test Example 4, a description is given of a water quality purification test in regard to river water.
Two fish tanks in which three liters of river water is placed and one goldfish approximately 4cm long is placed were prepared. Fifty grams of the metallic coating material according to Embodiment 2 was immersed only in one fish tank. After fish bait for the goldfish is supplied by the same quantity in the two fish tanks once every day, and the two fish tanks were left to stand indoors for 21 days without any cleaning, the water quality was inspected for the two fish tanks.
Table 1 shows the results of the water quality test. Also, in Table 1, the fish tank in which the metallic coating material is immersed is called "immersion," and the fish tank having no metallic coating material immersed is called "blank."

**[Table 1]**

| | Immersion | Blank |
|---|---|---|
| Nitrate nitrogen and Nitrite nitrogen (mg/L) | 0.08 | 1.75 |
| Chlorine ion (mg/L) | 31.8 | 37.4 |
| Consumption quantity of potassium permanganate (mg/L) | 32.2 | 193.4 |
| Quantity of common bacteria (Bacteria/1mL) | 5,400 | 244,000 |

As has been made clear from Table 1, in the fish tank in which the metallic coating material according to the Embodiment is immersed, nitrogen and organic substance concentration in the water are low, and the quantity of common bacteria is minimal. Therefore, it is obvious that the metallic coating material according to the Embodiment is excellent in the water quality purification action.

### [Embodiment 4]

Mechanical alloying was carried out, in which spherical matrices of 125 grams made of alumina having an average grain size of 5mm, tin powder (purity: 99%) of 2 grams having a grain size of 50 to 100µm as metallic powder, and titanium dioxide powder of 1 gram having a grain size of 50 to 100µm are injected into a titanium-made planetarymill container, and the container is subjected to planetary movement by which it is revolved at 500rpm and is rotated at 1250rpm for five minutes. After the matrices were taken out from the planetary mill container, the matrices were immersed in water and washed. When observed by means of a microscope, it was confirmed that tin powder and titanium dioxide powder, which are micronized to be 1µm or less were solidified on the surface of the matrices.
According to the above, it was found that what has been obtained in Embodiment 4 was a metallic coating material on which a metallic layer containing tin and titanium dioxide powder is formed.

### [Test Example 5]

A test was carried out to check an effect to reduce liquid fuel using a metallic coating material according to Embodiment 4.
A fuel consumption test was carried out, which measures the consumption quantity of gasoline in running in a state where the metallic coating material 1kg according to Embodiment 4 is placed in a gasoline tank of a vehicle and is immersed in gasoline. The vehicle used for the measurement was a SUZUKI ALT (First registration year: November 27, 2000, Type: GF-HA12S, Prime mover type: F6A) . Also, for comparison, fuel consumption was measured with no metallic coating material placed in a gasoline tank.
The vehicle was caused to drive back and forth 11km ten times (total running distance 220km) on an ordinary road almost free from any inclination and free from any traffic signals in a state where the vehicle is provided with a fuel tank filled with gasoline, and the fuel consumption amount after running was measured.
As a result, although the fuel consumption amount was 22.3 liters (the average value of two experiments) in the case where the metallic coating material was not immersed in a gasoline tank, the fuel consumption amount was 18.8 liters (the average value of ten experiments) in the case where the metallic coating material was immersed therein.
As described above, according to the embodiment, it was clear that the fuel consumption amount could be reduced by approximately 20%. Also, an effect to improve the fuel consumption may be expected not only for gasoline but also various types of fuels such as heavy oil, light oil, kerosene, etc.
Accordingly, it was confirmed that the metallic coating material according to the embodiment could realize the effect even in a dark place such as a gasoline tank.

### [Embodiment 6]

Mechanical alloying was carried out, in which spherical matrices of 125 grams made of synthetic resin (polyamide imide, glass-transition temperature 285°C) having an average grain size of 8mm and copper powder (purity: 99%) of 2 grams having a grain size of 50 to 100µm as metallic powder, are injected into a titanium-made vibration mill container, and the container is subjected to vibration for ten minutes. After the matrices were taken out from the vibration mill container, the matrices were immersed in water and washed. When observed by means of a microscope, it was confirmed that copper was solidified to be like a film on the surface of the matrices.
According to the above, it was found that what was obtained in Embodiment 6 was a metallic coating material on which a metallic layer containing copper is formed.
The metallic coating material according to Embodiment 6 is placed in a net-shaped liquid permeating sack, and was hung in the vicinity of a drainage port of a sink. Slime could be prevented from occurring at the water drainage.

### [Embodiment 7]

Mechanical alloying was carried out, in which spherical matrices of 125 grams made of hematite (artificial mineral) having an average grain size of 8mm and titanium powder (purity: 99%) of 2 grams having a grain size of 50 to 100µm as metallic powder are injected into a titanium-made planetary mill container, and the container is subjected to planetary movement by which it is revolved at 500rpm and is rotated at 1250rpm for five minutes. After the matrices were taken out from the planetary mill container, the matrices were immersed in water and washed. When observed by means of a microscope, it was confirmed that titanium was solidified to be like a film on the surface of the matrices.
According to the above, it was found that what has been obtained in Embodiment 7 was a metallic coating material on which a metallic layer containing titanium is formed.
The metallic coating material according to Embodiment 7 is placed in a cotton sack, fixed at the inside of the underwear of a person who is experiencing pain around the waist, and is adhered to the waist, wherein he or she expressed impression of feeling warm and the pain easing.

The present invention is not limited to the above-described Embodiments and may be subject to various modifications and variations within the scope not departing from the spirit of the invention. For example, in the metallic coating material according to Embodiment 1, tin powder and gold powder may be blended in addition to silver powder. Also, titanium oxide powder may be further blended to the metallic coating material according to Embodiment 2. Further, a metallic coating material for decoration may be produced using matrices along with silver and gold powder without use of titanium powder and titanium oxide power.

### [INDUSTRIAL APPLICABILITY]

The present invention relates to a method for producing a metallic coating material that coats the surface of a matrix with metal, and to metallic coating material, and the invention provides a method for producing a metallic coating material for which there is no concern that the metallic powder will scatter or ignite at the time of production, and which is excellent in productivity not requiring any cumbersome processes such as burning at a high temperature, etc., and provides a metallic coating material that is excellent in decorative features and functionality such as a catalyzing action, and handling efficiency.

## Claims

1. A method for producing a metallic coating material being featured in forming a metallic layer, by which the surface of matrices is coated with metallic powder, by executing mechanical alloyingof matrices formed by any of ceramic, mineral, metal, synthetic resin, oramixedmaterial thereof, and metallic powder.

2. The method for producing a metallic coating material according to Claim 1, wherein the metallic powder contains one type or a plurality of types of elements of tin, silver, copper, gold, platinum, ruthenium, palladium, and iridium.

3. The method for producing a metallic coating material according to Claim 1 or 2, wherein the metallic powder contains a titanium element.

4. The method for producing a metallic coating material according to any one of Claims 1 through 3, wherein titanium oxide powder is added to the metallic powder.

5. A metallic coating material produced by the method for producing a metallic coating material according to any one of Claims 1 through 4.
